# EUROPÄISCHE PATENTANMELDUNG

(11) **EP 3 961 877 A1**
(43) Veröffentlichungstag der Anmeldung: **02.03.2022**
(21) Anmeldenummer: 21192489.9
(22) Anmeldetag: 21.08.2021
(51) Int. Cl.: H02K 15/00, H02K 15/04

(54) **AUSRICHTVORRICHTUNG ZUM AUSRICHTEN UND POSITIONIEREN MINDESTENS EINES DRAHTS**

(30) Priorität: 25.08.2020 DE 102020122235
(71) Anmelder: VAF GmbH, 73441 Bopfingen (DE)
(72) Erfinder: Braun, Thomas, 73469 Riesbürg (DE)
(74) Vertreter: Schorr, Peter Karl

(57) **Zusammenfassung**

Die Erfindung betrifft eine Ausrichtvorrichtung (2) zum Ausrichten und Positionieren mindestens eines Drahts (4), insbesondere eines freien Drahtendes, mit mindestens einem, insbesondere scheibenförmigen, ersten Positioniermittel (6), das in eine erste Fügerichtung (8) bewegbar ist und das mindestens einen ersten Vorsprung (10) umfasst, der mindestens eine in Richtung der ersten Fügerichtung (8) geöffnete erste Aussparung (14) aufweist, mit mindestens einem, insbesondere scheibenförmigen, zweiten Positioniermittel (16), das mindestens einen zweiten Vorsprung (18) umfasst und das relativ zur Umgebung ortsfest festgelegt ist oder das in eine zweite Fügerichtung (24) bewegbar ist, wobei das erste Positioniermittel (6) und/oder das zweite Positioniermittel (16) von einer Freigabestellung, in der erstes Positioniermittel (6) und/oder zweites Positioniermittel (16) zum mindestens einen Draht (4), insbesondere berührungsfrei, beabstandet ist/sind, in eine Arbeitsstellung überführbar sind/ist, in der der mindestens eine Draht (4) zumindest abschnittsweise in der ersten Aussparung (14) des ersten Positioniermittels (6) und am zweiten Vorsprung (18) des zweiten Positioniermittels (16) berührend angeordnet ist, und wobei der erste Vorsprung (10) des ersten Positioniermittels (6) und der zweite Vorsprung (18) des zweiten Positioniermittels (16) in der Arbeitsstellung - quer zur Erstreckungsrichtung des mindestens einen Drahts (4) gesehen - überlappungsfrei zueinander angeordnet sind.

## Beschreibung

Die Erfindung betrifft eine Ausrichtvorrichtung zum Ausrichten und Positionieren mindestens eines Drahts.

Aus dem Stand der Technik sind Ausrichtvorrichtungen zum Ausrichten und Positionieren mindestens eines Drahts in unterschiedlichen Ausführungsformen bekannt. Diese dienen dazu, Maschinenelemente für elektrische Maschinen, wie beispielsweise Statoren oder Rotoren, herzustellen. Hierbei werden die Enden von aus Drähten gebildeten Leitern miteinander verbunden. Bei Maschinenelementen, bei denen mehrere Drahtstücke Spulenwicklungen bilden, werden deren Enden vor dem Miteinanderverbinden durch eine Ausrichtvorrichtung ausgerichtet und positioniert.

Eine Aufgabe eines Ausführungsbeispiels der Erfindung ist, eine Ausrichtvorrichtung vorzuschlagen, die eine alternative, kostengünstige Bauform anbietet.

Diese Aufgabe wird gelöst durch eine Ausrichtvorrichtung zum Ausrichten und Positionieren mindestens eines Drahts, insbesondere eines freien Drahtendes, mit mindestens einem, insbesondere scheibenförmigen, ersten Positioniermittel, das in eine erste Fügerichtung bewegbar ist und das mindestens einen ersten Vorsprung umfasst, der mindestens eine in Richtung der ersten Fügerichtung geöffnete erste Aussparung aufweist, mit mindestens einem, insbesondere scheibenförmigen, zweiten Positioniermittel, das mindestens einen zweiten Vorsprung umfasst und das relativ zur Umgebung ortsfest festgelegt ist oder das in eine zweite Fügerichtung bewegbar ist, wobei das erste Positioniermittel und/oder das zweite Positioniermittel von einer Freigabestellung, in der erstes Positioniermittel und/oder zweites Positioniermittel zum mindestens einen Draht, insbesondere berührungsfrei, beabstandet ist/sind, in eine Arbeitsstellung überführbar sind/ist, in der der mindestens eine Draht zumindest abschnittsweise in der ersten Aussparung des ersten Positioniermittels und am zweiten Vorsprung des zweiten Positioniermittels berührend angeordnet ist, und wobei der erste Vorsprung des ersten Positioniermittels und der zweite Vorsprung des zweiten Positioniermittels in der Arbeitsstellung - quer zur Erstreckungsrichtung des mindestens einen Drahts gesehen - überlappungsfrei zueinander angeordnet sind.

Dadurch, dass die Ausrichtvorrichtung zum Ausrichten und Positionieren mindestens eines Drahts ein erstes Positioniermittel umfasst, das mindestens eine erste Aussparung in dem mindestens einen ersten Vorsprung umfasst, kann mindestens ein Draht, insbesondere ein freies Drahtende, durch Überführen des ersten Vorsprungs in die Arbeitsstellung in der ersten Aussparung angeordnet werden.

Dadurch, dass die Ausrichtvorrichtung ein zweites Positioniermittel umfasst, an dem der mindestens eine Draht in der Arbeitsstellung berührend angeordnet ist, ist der mindestens eine Draht auf baulich einfache Weise einsammelbar, ausrichtbar und positionierbar. Dadurch, dass der erste Vorsprung des ersten Positioniermittels und der zweite Vorsprung des zweiten Positioniermittels in der Arbeitsstellung - quer zur Erstreckungsrichtung des mindestens einen Drahts gesehen, überlappungsfrei zueinander angeordnet sind, kann es vermieden werden, dass der Draht bezüglich seiner Erstreckungsrichtung im Bereich der Ausrichtvorrichtung gekrümmt wird. Hierdurch lässt sich ein besseres Arbeitsergebnis erzielen.

Der mindestens eine erste Vorsprung kann hakenartig ausgebildet sein und/oder der mindestens eine zweite Vorsprung kann eine durchgehen geradlinige Außenkante umfassen.

Grundsätzlich ist es denkbar, dass durch die Positioniervorrichtung lediglich ein einziger Draht gesammelt, positioniert und ausgerichtet wird. Es erweist sich als vorteilhaft, wenn mindestens zwei Drähte, insbesondere mindestens zwei Drahtenden, in der mindestens einen ersten Aussparung des ersten Positioniermittels eingesammelt, ausgerichtet und positioniert werden.

Um das Positionieren und Ausrichten des Drahts in der Arbeitsstellung weiter zu verbessern, ist bei einer Ausführungsform der Ausrichtvorrichtung vorgesehen, dass der zweite Vorsprung des zweiten Positionierungsmittels mindestens eine in der Arbeitsstellung in Richtung auf das erste Positionierungsmittel geöffnete zweite Aussparung aufweist, wobei der mindestens eine Draht in der Arbeitsstellung zumindest abschnittsweise in der ersten Aussparung des ersten Positioniermittels und zumindest abschnittsweise in der zweiten Aussparung des zweiten Positioniermittels angeordnet und gehalten ist.

Dadurch, dass der zweite Vorsprung des zweiten Positionierungsmittels eine zweite Aussparung umfasst, in der der mindestens eine Draht in der Arbeitsstellung zumindest abschnittsweise angeordnet ist, ist der Draht in der Arbeitsstellung in der ersten Aussparung des ersten Vorsprungs des ersten Positioniermittels und in der zweiten Aussparung des zweiten Vorsprungs des zweiten Positioniermittels gehalten. Hierdurch ist die Gefahr eines Verrutschens des Drahts beim Überführen in die Arbeitsstellung reduziert.

Die erste Aussparung und die zweite Aussparung können leicht versetzt oder einander gegenüberliegend angeordnet sein.

Beispielsweise ist es denkbar, dass mindestens eine erste Aussparung eines ersten Vorsprungs des ersten Positioniermittels und mindestens eine zweite Aussparung eines zweiten Vorsprungs des zweiten Positioniermittels in der Arbeitsstellung einander in Gänze oder abschnittsweise, zumindest abschnittsweise überlappend, fortsetzend fluchtend gegenüberliegen.

Erstes Positioniermittel und zweites Positioniermittel können grundsätzlich eine beliebige geometrische Form umfassen, sofern sie der Funktion nachkommen, den mindestens einen Draht in der Arbeitsstellung festzulegen. Bei einer Ausführungsform der Ausrichtvorrichtung ist vorgesehen, dass das erste Positionierungsmittel einen scheiben- oder ringförmigen Abschnitt umfasst, dass die erste Fügerichtung bezüglich eines ersten Kreismittelpunkts des ersten Positionierungsmittels in Umfangsrichtung verläuft und dass der mindestens eine erste Vorsprung des ersten Positionierungsmittels am scheiben- oder ringförmigen Abschnitt festgelegt und bezüglich des ersten Kreismittelpunkts in radialer Richtung seine längste Erstreckung umfasst und/oder dass das zweite Positionierungsmittel einen scheiben- oder ringförmigen Abschnitt umfasst, dass die zweite Fügerichtung bezüglich eines zweiten Kreismittelpunkts des zweiten Positionierungsmittels in Umfangsrichtung verläuft und dass der mindestens eine zweite Vorsprung des zweiten Positionierungsmittels am scheiben oder ringförmigen Abschnitt festgelegt und bezüglich des zweiten Kreismittelpunkts in radialer Richtung seine längste Erstreckung umfasst.

Solchenfalls erstreckt sich der erste Vorsprung des ersten Positioniermittels von dem scheiben- oder ringförmigen Abschnitt in Richtung erster Kreismittelpunkt hin oder erstreckt sich von der dem ersten Kreismittelpunkt abgewandten Seite des scheiben- oder ringförmigen Abschnitts von dem ersten Kreismittelpunkt hin weg. Dies gilt in gleicher Weise für den zweiten Vorsprung des zweiten Positioniermittels bezüglich des zweiten Kreism ittelpunkts.

Es ist denkbar, dass erster Kreismittelpunk und zweiter Kreismittelpunkt zueinander beabstandet sind. Es erweist sich als vorteilhaft, wenn der erste Kreismittelpunkt und der zweite Kreismittelpunkt deckungsgleich sind. Solchenfalls können beide Positioniermittel um einen gemeinsamen Kreismittelpunkt bewegt werden. Die Durchmesser des ersten Positioniermittels, insbesondere des scheiben- oder ringförmigen Abschnitts des ersten Positioniermittels, zum ersten Kreismittelpunkt sowie der Durchmesser des zweiten Positioniermittels, insbesondere bezüglich des scheiben- oder ringförmigen Abschnitts zum zweiten Kreismittelpunkt, können gleich oder voneinander abweichend sein.

Wenn beide Abstände gleich sind, lässt sich die Ausrichtvorrichtung kompakt ausbilden.

Bei einer Weiterbildung der Ausrichtvorrichtung erweist es sich als vorteilhaft, wenn die erste Fügerichtung und die zweite Fügerichtung zueinander entgegengesetzt verlaufen, insbesondere wenn die erste Fügerichtung bezüglich des ersten Kreismittelpunkts im Uhrzeigersinn und die zweite Fügerichtung bezüglich des zweiten Kreismittelpunkts im Gegenuhrzeigersinn verläuft oder umgekehrt.

Wenn die erste Fügerichtung und die zweite Fügerichtung zueinander entgegengesetzt verlaufen, können der erste Vorsprung und der zweite Vorsprung voneinander weg oder aufeinander zu bewegt werden. Insbesondere, wenn das erste Positioniermittel und das zweite Positioniermittel um einen ersten Kreismittelpunkt, bzw. einen zweiten Kreismittelpunkt angeordnet sind, kann die erste Fügerichtung im Uhrzeigersinn und die zweite Fügerichtung im Gegenuhrzeigersinn verlaufen oder umgekehrt. Hierdurch lässt sich eine kompakte Ausbildung einer Ausrichtvorrichtung sowie das Positionieren und Anordnen des mindestens einen Drahts durch eine einfache Kinematik realisieren.

Um ein Positionieren und Ausrichten des mindestens einen Drahts, insbesondere des mindestens einen Drahtendes, weiter zu verbessern, erweist es sich als vorteilhaft, wenn mindestens eine erste Aussparung eines ersten Vorsprungs des ersten Positionierungsmittels und/oder mindestens eine zweite Aussparung eines zweiten Vorsprungs des zweiten Positionierungsmittels zumindest einen Querschnitt umfasst, der sich in der Arbeitsstellung in vom jeweils anderen Positioniermittel abgewandter Richtung hin verkleinert.

Durch das Ausbilden der ersten Aussparung, bzw. der zweiten Aussparung mit einem sich in vom jeweils anderen Positioniermittel abgewandter Richtung hin verkleinerten Querschnitt, wird eine trichterartige Kontur erzielt, durch die der Draht in der Arbeitsposition zumindest nahezu spielfrei festlegbar ist. Hierdurch lassen sich die Arbeitsergebnisse bei den folgenden weiteren Bearbeitungsprozessen des Drahtes verbessern.

Der Querschnitt der ersten Aussparung des ersten Vorsprungs und/oder der Querschnitt der zweiten Aussparung des zweiten Vorsprungs können sich beliebig verkleinern. Ferner kann das Verkleinern des Querschnitts nur abschnittsweise oder kontinuierlich erfolgen. Bei einer Weiterbildung der Ausrichtvorrichtung hat es sich als vorteilhaft herausgestellt, wenn der sich in Arbeitsstellung in vom jeweils anderen Positioniermittel abgewandter Richtung hin verkleinernde Querschnitt der ersten Aussparung und/oder der zweiten Aussparung einen sich konisch oder verrundet verkleinernden Abschnitt umfasst.

Solchenfalls wird auf einfache Weise eine trichterförmige Kontur zur Verfügung gestellt.

Um ein Ausweichen des mindestens einen Drahts, insbesondere des mindestens einen Drahtendes, quer oder schräg zur ersten Fügerichtung und/oder quer oder schräg zur zweiten Fügerichtung zu verhindern, kann die Ausrichtvorrichtung mindestens ein, insbesondere ring- oder scheibenförmiges, Führungsmittel umfassen, das mindestens ein Führungselement aufweist, das in Richtung quer oder schräg zur ersten Fügerichtung und/oder zweiten Fügerichtung mindestens einen Anschlag für den mindestens einen Draht bildet und ein Bewegen des mindestens einen Drahts quer oder schräg zur ersten Fügerichtung und/oder zur zweiten Fügerichtung begrenzt.

Hierdurch ist ein Ausweichen des Drahts vermeidbar.

Das Führungsmittel kann beliebig ausgebildet sein, sofern es der technischen Funktion nachkommt, den Draht, insbesondere das mindestens eine Drahtende, gegen ein Bewegen quer oder schräg zur ersten Fügerichtung und/oder zur zweiten Fügerichtung zu begrenzen. Solchenfalls kann das Führungsmittel lediglich eine Scheibe umfassen.

Ferner können mehrere Führungsmittel vorgesehen sein, die zueinander beabstandet angeordnet sind.

Die Ausrichtvorrichtung kann beispielsweise zwei scheibenförmige Führungsmittel umfassen, wobei bei einem ersten der beiden Führungsmittel die äußere Umrandung einen inneren Anschlag für den mindestens einen Draht bildet und bei dem zweiten Führungsmittel der innere Rand einen äußeren Anschlag für den mindestens einen Draht bildet.

Die Ausrichtvorrichtung lässt sich in Weiterbildung letztgenannten Erfindungsgedankens kompakt und bauteilreduziert ausbilden, wenn das mindestens eine Führungselement des Führungsmittels wenigstens eine Ausnehmung umfasst, in die der mindestens eine Draht, insbesondere das freie Drahtende, in der Freigabestellung einführbar und in der ein Bewegen des Drahts vollumfänglich begrenzt ist.

Solchenfalls kann das mindestens eine Führungsmittel eine Scheibe mit mindestens einer oder mehreren Ausnehmungen umfassen. Darüber hinaus erweist es sich als vorteilhaft, wenn das Führungsmittel scheiben- oder ringförmig ausgebildet ist und einen dritten Kreismittelpunkt umfasst und dass mindestens eine erste Aussparung des ersten Vorsprungs des ersten Positioniermittels und/oder mindestens eine zweite Aussparung des zweiten Vorsprungs des zweiten Positioniermittels die Ausnehmung zumindest in der Arbeitsstellung zumindest abschnittsweise überlappt.

Hierdurch lässt sich die Ausrichtvorrichtung kompakt ausbilden. Der dritte Kreismittelpunkt kann zum ersten Kreismittelpunkt, bzw. zum zweiten Kreismittelpunkt beabstandet sein oder einen gemeinsamen Kreismittelpunkt mit dem ersten Kreismittelpunkt und dem zweiten Kreismittelpunkt bilden.

Es lassen sich mehrere Drähte, insbesondere mehrere Drahtenden, miteinander fügen, wenn das Führungsmittel eine Vielzahl von kranzartig, gleichmäßig oder ungleichmäßig verteilten Ausnehmungen aufweist, insbesondere wobei mindestens drei Ausnehmungen bezüglich des dritten Kreismittelpunkts in radialer Richtung gleichmäßig oder ungleichmäßig zueinander beabstandet angeordnet sind.

Solchenfalls ist das scheibenförmig ausgebildete Führungselement lochkranzartig ausgebildet. Um in jeder oder zumindest in mehreren der Ausnehmungen mindestens einen Draht zu positionieren und auszurichten, ist bei einer weiteren Ausführungsform der Ausrichtvorrichtung vorgesehen, dass jedem ersten Vorsprung des ersten Positioniermittels mindestens drei erste Ausnehmungen des Führungsmittels und mindestens ein zweiter Vorsprung des zweiten Positioniermittels zuordenbar oder zugeordnet ist.

Solchenfalls umfasst zumindest der erste Vorsprung des ersten Positioniermittels mindestens drei erste Ausnehmungen, wodurch der erste Vorsprung eine schlüsselbartartige Anmutung umfasst. Dieses gilt in gleicher Weise für den zweiten Vorsprung, wenn dieser ebenfalls mindestens drei zweite Ausnehmungen umfasst.

Darüber hinaus ist es denkbar, dass der zweite Vorsprung des zweiten Positioniermittels keine zweite Aussparung umfasst.

Um ein gleichzeitiges Ausrichten und Positionieren von mehreren Drähten zu optimieren, erweist es sich als vorteilhaft, wenn der mindestens eine erste Vorsprung des ersten Positioniermittels mindestens zwei, insbesondere mindestens drei, in Richtung der ersten Fügerichtung geöffnete erste Aussparungen aufweist, die quer oder schräg zur ersten Fügerichtung den gleichen oder ungleichen Abstand zueinander aufweisen und/oder wenn der mindestens eine zweite Vorsprung des zweiten Positioniermittels mindestens zwei, insbesondere mindestens drei, in der Arbeitsstellung in Richtung auf das erste Positioniermittel geöffnete zweite Aussparungen aufweist, die den gleichen oder ungleichen Abstand zueinander aufweisen.

Grundsätzlich ist es denkbar, dass das zweite Positioniermittel beim Fügen, insbesondere beim Überführen des ersten Positioniermittels in die erste Fügerichtung, bezüglich der Umgebung ortsfest und unbeweglich ist. Ferner kann das zweite Positioniermittel in eine zweite Fügerichtung bewegbar sein.

Um ein kompaktes Ausbilden der Ausrichtvorrichtung zu gewährleisten erweist es sich als vorteilhaft, wenn das erste Positioniermittel auf einer dem freien Ende des mindestens einen Drahts zugewandten Seite am Führungsmittel, insbesondere flächenhaft anliegend, angeordnet ist und/oder wenn das zweite Positioniermittel auf einer dem freien Ende des mindestens einen Drahts abgewandten Seite, insbesondere flächenhaft anliegend, am Führungsmittel angeordnet ist.

Das erste Positioniermittel und das zweite Positioniermittel können solchenfalls ringscheibenartig, ringscheibensegmentartig ausgebildet sein und der mindestens eine erste Vorsprung, bzw. der mindestens eine zweite Vorsprung kammartig ausgebildet sein. Ferner kann das erste Positioniermittel und/oder das zweite Positioniermittel eine Vielzahl von ersten Vorsprüngen, bzw. von zweiten Vorsprüngen umfassen, die sich zahnradartig in Richtung ersten Kreismittelpunkt, bzw. zweiten Kreismittelpunkt hin oder vom ersten Kreismittelpunkt, bzw. vom zweiten Kreismittelpunkt weg erstrecken.

Um das erste Positioniermittel und das zweite Positioniermittel sowie das Führungsmittel aneinander beweglich festzulegen, umfasst eine Ausführungsform der Ausrichtvorrichtung mindestens ein, insbesondere kreissegmentartiges- oder ringförmiges, Rahmenmittel, das das erste Positioniermittel, das zweite Positioniermittel und/oder das Führungsmittel bezüglich eines gemeinsamen Kreismittelpunkts zumindest abschnittsweise umfangsseitig umgibt.

Hierdurch sind erstes Positioniermittel, zweites Positioniermittel und/oder Führungsmittel klammerartig haltbar.

Bei einer Weiterbildung letztgenannter Ausführungsform ist vorgesehen, dass das mindestens eine Rahmenmittel mindesten zwei Rahmenelemente umfasst, die quer zur ersten Fügerichtung miteinander fügbar und aneinander festlegbar sind, wobei die beiden Rahmenelemente das erste Positioniermittel und das zweite Positioniermittel klammerartig umgreifen und/oder wobei zwischen den beiden Rahmenelementen das Führungsmittel, insbesondere bezüglich der Rahmenelemente drehfest, festgelegt ist.

Solchenfalls ist das Rahmenmittel einfach fügbar.

Schließlich erweist es sich als vorteilhaft, wenn die Ausrichtvorrichtung mindestens eine Festlegeeinheit zum zumindest in der Arbeitsstellung Festlegen des ersten Positioniermittels relativ zum zweiten Positioniermittels umfasst. Solchenfalls kann der mindestens eine Draht, insbesondere das mindestens eine Drahtende, in der gefügten Anordnung festgelegt werden und in weiteren Bearbeitungsschritten bearbeitet werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Ausrichtvorrichtung.

In der Zeichnung zeigt:

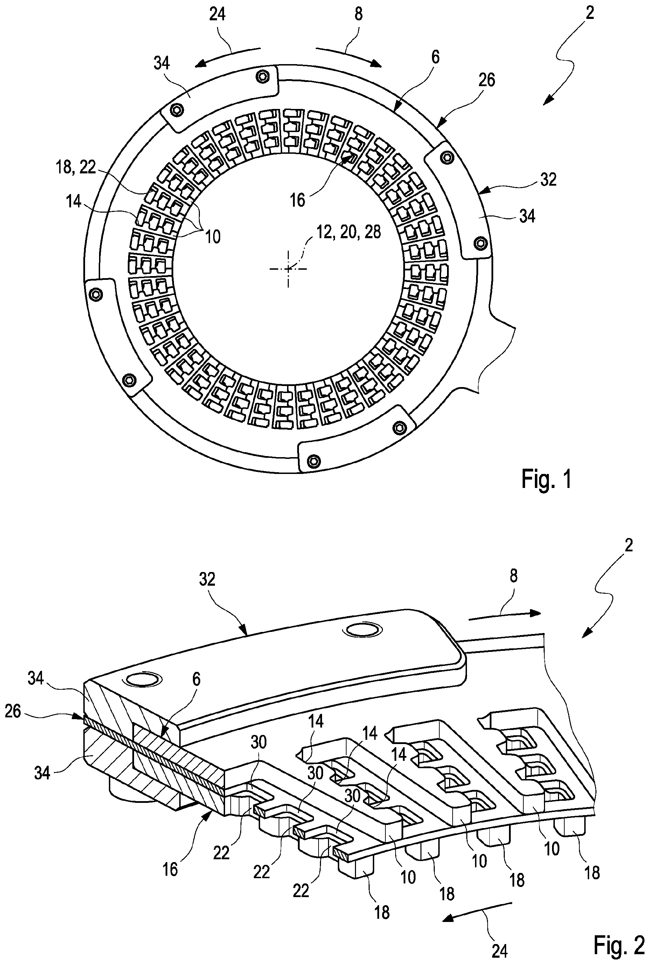

- Figur 1: Eine perspektivische Draufsicht auf ein erstes Ausführungsbeispiel der Ausrichtvorrichtung;
- Figur 2: Eine perspektivische Detailansicht eines Ausschnitts der Ausrichtvorrichtung gemäß Figur 1;

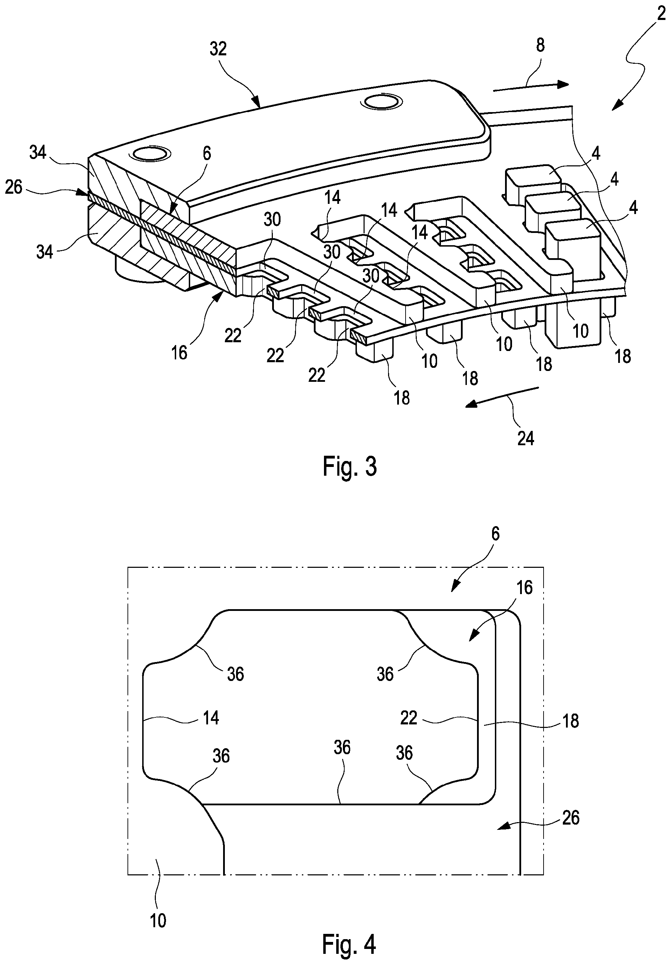

- Figur 3: Eine Draufsicht auf eine Ausrichtvorrichtung gemäß Figur 1 mit angeordneten Drähten;
- Figur 4: Eine Detailansicht einer ersten Aussparung eines ersten Vorsprungs eines ersten Positioniermittels der Ausrichtvorrichtung gemäß Figur 1.

Die Figuren zeigen ein Ausführungsbeispiel einer insgesamt mit dem Bezugszeichen 2 versehenen Ausrichtvorrichtung zum Ausrichten und Positionieren mindestens eines Drahts 4. Hierzu umfasst die Ausrichtvorrichtung 2 ein scheibenförmiges erstes Positioniermittel 6, das in eine erste Fügerichtung 8 bewegbar ist. Bei dem in den Figuren gezeigten Ausführungsbeispiel der Ausrichtvorrichtung 2 umfasst das erste Positioniermittel 6 eine Vielzahl von ersten Vorsprüngen 10, die in Richtung eines ersten Kreismittelpunkts 12 in radialer Richtung ihre längste Erstreckung umfassen. Die ersten Vorsprünge 10 umfassen bei dem in den Figuren gezeigten Ausführungsbeispiel jeweils drei erste Aussparungen 14, die in Richtung der ersten Fügerichtung 8 hin geöffnet sind.

Um in den ersten Aussparungen 14 einen Draht 4 berührend anzulegen, umfasst die Ausrichtvorrichtung 2 ein scheibenförmiges zweites Positioniermittel 16, das eine Vielzahl von zweiten Vorsprüngen 18 umfasst, die in Richtung eines zweiten Kreismittelpunkts 20 hin in radialer Richtung erstreckt sind. Auch die zweiten Vorsprünge 18 umfassen jeweils drei zweite Aussparungen 22, die in Richtung hin auf die ersten Vorsprünge 10 des ersten Positioniermittels 6 geöffnet sind. Bei dem in den Figuren gezeigten Ausführungsbeispiel ist das zweite Positioniermittel 16 entlang einer zweiten Fügerichtung 24 um den zweiten Kreismittelpunkt 20 drehbar.

Beim Fügen des mindestens einen Drahts 4 wird solchenfalls der Draht 4 in einer Arbeitsstellung sowohl in der ersten Aussparung 14 des ersten Vorsprungs 10 des ersten Positioniermittels 6 sowie innerhalb einer zweiten Aussparung 22 des zweiten Vorsprungs 18 des zweiten Positioniermittels 16 berührend angeordnet, insbesondere geklemmt. Der erste Vorsprung 10 und der zweite Vorsprung 18 sind hierbei - quer zur Erstreckungsrichtung des mindestens einen Drahts 4 gesehen, überlappungsfrei zueinander angeordnet.

Bei dem in den Figuren ersichtlichen Ausführungsbeispiel ist zwischen dem ersten Positioniermittel 6 und dem zweiten Positioniermittel 16 ein scheibenförmiges Führungsmittel 26 angeordnet. Dieses umfasst in Richtung auf einen dritten Kreismittelpunkt 28 jeweils drei Ausnehmungen 30 auf, die zumindest abschnittsweise in der Arbeitsstellung des ersten Positioniermittels 6 und des zweiten Positioniermittels 16 mit der ersten Aussparung 14 und mit der zweiten Aussparung 22 fluchten. Hierdurch ist einem Draht 4 beim Überführen des ersten Positioniermittels 6 und/oder des zweiten Positioniermittels 16 von der Freigabestellung in die Arbeitsstellung ein Ausweichen des Drahts 4 in radialer Richtung vorgebeugt.

Bei den in den Figuren gezeigten Ausführungsbeispiel umfassen erster Kreismittelpunkt 12, zweiter Kreismittelpunkt 20 und dritter Kreismittelpunkt 28 einen gemeinsamen Punkt.

Um das erste Positioniermittel 6, das zweite Positioniermittel 16 und das zwischen dem ersten Positioniermittel 6 und dem zweiten Positioniermittel 16 angeordnete Führungsmittel 26 festzulegen, umfasst die Ausrichtvorrichtung 2 Rahmenmittel 32. Diese umfassen zwei Rahmenelemente 34, die quer zur ersten Fügerichtung 8 miteinander fügbar und einander festlegbar sind. Die Rahmenelemente 34 des Rahmenmittels 32 umgreifen das erste Positioniermittel 6 und das zweite Positioniermittel 16 klammerartig. Das Führungsmittel 26 ist bei dem in den Figuren gezeigten Ausführungsbeispiel zwischen den beiden Rahmenelementen 34 angeordnet, so dass diese durch das Führungsmittel 26 voneinander beabstandet sind.

Um ein Ausrichten und Positionieren des mindestens einen Drahts 4 zu verbessern, umfassen die ersten Aussparungen 14 sowie die zweiten Aussparungen 22 einen Querschnitt, der sich in der Arbeitsstellung vom jeweils anderen Positioniermittel in abgewandter Richtung hin verkleinert. Der Querschnitt kann solchenfalls durch einen sich konisch oder verrundet verkleinernden Abschnitt 36 der ersten Aussparungen 14 und/oder der zweiten Aussparungen 22 gebildet sein.

Im Folgenden wird kurz die Wirkungsweise der Ausrichtvorrichtung beschrieben:
In einer Freigabestellung, in der die ersten Vorsprünge 10 des ersten Positioniermittels 6 zu den zweiten Vorsprüngen 18 des zweiten Positioniermittels 16 ihren maximalen Abstand aufweisen, wird mindestens ein Draht 4, insbesondere mehrere Drähte 4, in die Ausnehmung 30 des Führungsmittels 26 hindurchgesteckt. Anschließend werden die ersten Vorsprünge 10 des ersten Positioniermittels 6 und die zweiten Vorsprünge 18 des zweiten Positioniermittels 16 entlang der ersten Fügerichtung 8, bzw. entlang der zweiten Fügerichtung 24 aufeinander zubewegt. Hierbei geraten die Drähte 4 in Eingriff mit der jeweiligen ersten Aussparung 14 des ersten Vorsprungs 10 sowie der jeweiligen zweiten Aussparung 22 des zweiten Vorsprungs 18 und werden durch die Ausnehmung 30 des Führungsmittels 26 durch ein Ausweichen in radialer Richtung festgelegt. Wenn der Abstand zwischen dem ersten Vorsprung 10 des ersten Positioniermittels 6 und dem zweiten Vorsprung 18 des zweiten Positioniermittels 16 minimal ist, liegt der mindestens eine Draht 4 flächenhaft sowohl in der ersten Aussparung 14 als auch in der zweiten Aussparung 22 an.

Dadurch, dass sowohl die erste Aussparung 14, als auch die zweite Aussparung 22 einen sich verkleinernden Abschnitt 36 umfassen, ist ein zumindest nahezu spielfreies Anordnen des Drahts 4 in der Arbeitsstellung ermöglicht.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Ausrichtvorrichtung
- 4: Draht
- 6: erstes Positioniermittel
- 8: erste Fügerichtung
- 10: erster Vorsprung
- 12: erster Kreismittelpunkt
- 14: erste Aussparung
- 16: zweites Positioniermittel
- 18: zweiter Vorsprung
- 20: zweiter Kreismittelpunkt
- 22: zweite Aussparung
- 24: zweite Fügerichtung
- 26: Führungsmittel
- 28: dritter Kreismittelpunkt
- 30: Ausnehmung
- 32: Rahmenmittel
- 34: Rahmenelement
- 36: verkleinernder Abschnitt

## Patentansprüche

1. Ausrichtvorrichtung (2) zum Ausrichten und Positionieren mindestens eines Drahts (4), insbesondere eines freien Drahtendes, mit mindestens einem, insbesondere scheibenförmigen, ersten Positioniermittel (6), das in eine erste Fügerichtung (8) bewegbar ist und das mindestens einen ersten Vorsprung (10) umfasst, der mindestens eine in Richtung der ersten Fügerichtung (8) geöffnete erste Aussparung (14) aufweist, mit mindestens einem, insbesondere scheibenförmigen, zweiten Positioniermittel (16), das mindestens einen zweiten Vorsprung (18) umfasst und das relativ zur Umgebung ortsfest festgelegt ist oder das in eine zweite Fügerichtung (24) bewegbar ist, wobei das erste Positioniermittel (6) und/oder das zweite Positioniermittel (16) von einer Freigabestellung, in der erstes Positioniermittel (6) und/oder zweites Positioniermittel (16) zum mindestens einen Draht (4), insbesondere berührungsfrei, beabstandet ist/sind, in eine Arbeitsstellung überführbar sind/ist, in der der mindestens eine Draht (4) zumindest abschnittsweise in der ersten Aussparung (14) des ersten Positioniermittels (6) und am zweiten Vorsprung (18) des zweiten Positioniermittels (16) berührend angeordnet ist, und wobei der erste Vorsprung (10) des ersten Positioniermittels (6) und der zweite Vorsprung (18) des zweiten Positioniermittels (16) in der Arbeitsstellung - quer zur Erstreckungsrichtung des mindestens einen Drahts (4) gesehen - überlappungsfrei zueinander angeordnet sind.

2. Ausrichtvorrichtung (2) nach Anspruch 1, **dadurch gekennzeichnet, dass** der zweite Vorsprung (18) des zweiten Positionierungsmittels (16) mindestens eine in der Arbeitsstellung in Richtung auf das erste Positionierungsmittel (6) geöffnete zweite Aussparung (22) aufweist, wobei der mindestens eine Draht (4) in der Arbeitsstellung zumindest abschnittsweise in der ersten Aussparung (14) des ersten Positioniermittels (6) und zumindest abschnittsweise in der zweiten Aussparung (22) des zweiten Positioniermittels (16) angeordnet und gehalten ist.

3. Ausrichtvorrichtung (2) nach Anspruch 1 oder 2, **dadurch gekennzeichnet, dass** das erste Positionierungsmittel (6) einen scheiben- oder ringförmigen Abschnitt umfasst, dass die erste Fügerichtung (8) bezüglich eines ersten Kreismittelpunkts (12) des ersten Positionierungsmittels (6) in Umfangsrichtung verläuft und dass der mindestens eine erste Vorsprung (10) des ersten Positionierungsmittels (6) am scheiben- oder ringförmigen Abschnitt festgelegt und bezüglich des ersten Kreismittelpunkts (12) in radialer Richtung seine längste Erstreckung umfasst und/oder dass das zweite Positionierungsmittel (16) einen scheiben- oder ringförmigen Abschnitt umfasst, dass die zweite Fügerichtung (24) bezüglich eines zweiten Kreismittelpunkts (20) des zweiten Positionierungsmittels (16) in Umfangsrichtung verläuft und dass der mindestens eine zweite Vorsprung (18) des zweiten Positionierungsmittels (16) am scheiben oder ringförmigen Abschnitt festgelegt und bezüglich des zweiten Kreismittelpunkts (20) in radialer Richtung seine längste Erstreckung umfasst.

4. Ausrichtvorrichtung (2) nach einem der Ansprüche 2 bis 4, **dadurch gekennzeichnet, dass** die erste Fügerichtung (8) und die zweite Fügerichtung (24) zueinander entgegengesetzt verlaufen, insbesondere dass die erste Fügerichtung (8) bezüglich des ersten Kreismittelpunkts (12) im Uhrzeigersinn und die zweite Fügerichtung (24) bezüglich des zweiten Kreismittelpunkts (20) im Gegenuhrzeigersinn verläuft oder umgekehrt.

5. Ausrichtvorrichtung (2) nach mindestens einem der vorhergehenden Ansprüche, **dadurch gekennzeichnet, dass** mindestens eine erste Aussparung (14) eines ersten Vorsprungs (10) des ersten Positionierungsmittels (6) und/oder mindestens eine zweite Aussparung (22) eines zweiten Vorsprungs (18) des zweiten Positionierungsmittels (16) zumindest einen Querschnitt umfasst, der sich in der Arbeitsstellung in vom jeweils anderen Positioniermittel abgewandter Richtung hin verkleinert.

6. Ausrichtvorrichtung (2) nach Anspruch 5, **dadurch gekennzeichnet, dass** der sich in Arbeitsstellung in vom jeweils anderen Positioniermittel abgewandter Richtung hin verkleinernde Querschnitt der ersten Aussparung (14) und/oder der zweiten Aussparung (22) einen sich konisch oder verrundet verkleinernden Abschnitt (36) umfasst.

7. Ausrichtvorrichtung (2) nach mindestens einem der vorhergehenden Ansprüche, **gekennzeichnet durch** mindestens ein, insbesondere ring-oder scheibenförmiges, Führungsmittel (26), das mindestens ein Führungselement aufweist, das in Richtung quer oder schräg zur ersten Fügerichtung (8) und/oder zweiten Fügerichtung (24) mindestens einen Anschlag für den mindestens einen Draht (4) bildet und ein Bewegen des mindestens einen Drahts (4) quer oder schräg zur ersten Fügerichtung (8) und/oder zur zweiten Fügerichtung (24) begrenzt.

8. Ausrichtvorrichtung (2) nach Anspruch 7, **dadurch gekennzeichnet, dass** das mindestens eine Führungselement des Führungsmittels (26) wenigstens eine Ausnehmung (30) umfasst, in die der mindestens eine Draht (4) insbesondere das freie Drahtende, in der Freigabestellung einführbar und in der ein Bewegen des Drahts (4) vollumfänglich begrenzt ist.

9. Ausrichtvorrichtung (2) nach Anspruch 8, **dadurch gekennzeichnet, dass** das Führungsmittel (26) scheiben- oder ringförmig ausgebildet ist und einen dritten Kreismittelpunkt (28) umfasst und dass mindestens eine erste Aussparung (14) des ersten Vorsprungs (10) des ersten Positioniermittels (6) und/oder mindestens eine zweite Aussparung (22) des zweiten Vorsprungs (18) des zweiten Positioniermittels (16) die Ausnehmung (30) zumindest in der Arbeitsstellung zumindest abschnittsweise überlappt.

10. Ausrichtvorrichtung (2) nach mindestens einem der Ansprüche 7 bis 9, **dadurch gekennzeichnet, dass** das Führungsmittel (26) eine Vielzahl von kranzartig, gleichmäßig oder ungleichmäßig verteilten Ausnehmungen (30) aufweist, insbesondere wobei mindestens drei Ausnehmungen (30) bezüglich des dritten Kreismittelpunkts (28) in radialer Richtung gleichmäßig oder ungleichmäßig zueinander beabstandet angeordnet sind.

11. Ausrichtvorrichtung (2) nach mindestens einem der Ansprüche 7 bis 10, **dadurch gekennzeichnet, dass** jedem ersten Vorsprung (10) des ersten Positioniermittels (6) mindestens drei erste Ausnehmungen (30) des Führungsmittels (26) und mindestens ein zweiter Vorsprung (18) des zweiten Positioniermittels (16) zuordenbar oder zugeordnet ist.

12. Ausrichtvorrichtung (2) nach mindestens einem der Ansprüche 7 bis 11, **dadurch gekennzeichnet, dass** das erste Positioniermittel (6) auf einer dem freien Ende des mindestens einen Drahts (4) zugewandten Seite am Führungsmittel (26), insbesondere flächenhaft anliegend, angeordnet ist und/oder dass das zweite Positioniermittel (16) auf einer dem freien Ende des mindestens einen Drahts (4) abgewandten Seite, insbesondere flächenhaft anliegend, am Führungsmittel (26) angeordnet ist.

13. Ausrichtvorrichtung (2) nach mindestens einem der vorhergehenden Ansprüche, **gekennzeichnet durch** mindestens ein, insbesondere kreissegmentartiges- oder ringförmiges, Rahmenmittel (32), das das erste Positioniermittel (6), das zweite Positioniermittel (16) und/oder das Führungsmittel (26) bezüglich eine gemeinsamen Kreismittelpunkts zumindest abschnittsweise umfangsseitig umgibt.

14. Ausrichtvorrichtung (2) nach Anspruch 13, **dadurch gekennzeichnet, dass** das mindestens eine Rahmenmittel (32) mindesten zwei Rahmenelemente (34) umfasst, die quer zur ersten Fügerichtung (8) miteinander fügbar und aneinander festlegbar sind, wobei die beiden Rahmenelemente (34) das erste Positioniermittel (6) und das zweite Positioniermittel (16) klammerartig umgreifen und/oder wobei zwischen den beiden Rahmenelementen (34) das Führungsmittel (26), insbesondere bezüglich der Rahmenelemente (34) drehfest, festgelegt ist.

15. Ausrichtvorrichtung (2) nach mindestens einem der vorhergehenden Ansprüche, **gekennzeichnet durch** mindestens eine Festlegeeinheit zum zumindest in der Arbeitsstellung Festlegen des ersten Positioniermittels (6) relativ zum zweiten Positioniermittel (16).
